**Europäisches Patentamt**

**European Patent Office**

**Office européen des brevets**

(11) Numéro de publication: **0 103 530**
**A1**

# (12) DEMANDE DE BREVET EUROPEEN

(21) Numéro de dépôt: **83420147.7**

(22) Date de dépôt: **09.09.83**

(51) Int. Cl.³: **A 01 G 23/04**

(30) Priorité: **09.09.82 FR 8215548**

(43) Date de publication de la demande: **21.03.84**
**Bulletin 84/12**

(84) Etats contractants désignés: **AT BE CH DE GB IT LI LU NL SE**

(71) Demandeur: **A.C.B., La Bouvière Saint-Sulpice, F-73160 Cognin Savoie (FR)**

(72) Inventeur: **Berthollet, Pierre, La Bouvière Saint-Sulpice, Cognin Savoie (FR)**

(74) Mandataire: **Maureau, Bernard, CABINET GERMAIN & MAUREAU 20, boulevard E. Deruelle B.P. 11, F-69392 Lyon Cédex 06 (FR)**

(54) **Machine pour l'arrachage d'arbustes.**

(57) Le porte-outil (6) servant de support à la bêche (7) est monté coulissant sur au moins une glissière longitudinale (18) fixée indirectement sur le tracteur (1) et est équipé de moyens d'ancrage (24) dans le sol, grâce auxquels la glissière (18) peut se déplacer par rapport au porte-outil (6) immobilisé par ces moyens d'ancrage (24) pendant la phase d'arrachage, deux vérins étant prévus, l'un (25) pour la commande des moyens d'ancrage (24) et l'autre (23) pour déplacer le porte-outil (6) en direction de l'avant sur la glissière (18).

EP 0 103 530 A1

1

## MACHINE POUR L'ARRACHAGE D'ARBUSTES

Le brevet européen 0 022 733 concerne une machine destinée à l'arrachage d'arbustes et de plants en vue de leur transplantation d'un lieu de culture à un autre et ce dans des conditions telles que le plant soit arraché, transporté et replanté avec une motte de terre enveloppant sa base et ses racines.

Cette machine comporte un chassis qui, monté sur le relevage hydraulique à trois points en arrière d'un tracteur, comporte une bêche rotative portée par un porte-outil en forme de couronne et animée d'un mouvement de rotation autour de son axe vertical pour découper une motte de terre autour de l'arbuste à arracher ; cette bêche est constituée par une unique lame solidaire de ladite couronne qui présente une ouverture et est montée mobile en rotation dans une autre couronne solidaire du chassis et possédant une ouverture d'angle sensiblement égale, des moyens étant prévus pour déplacer la couronne intérieure dans celle extérieure et amener ainsi la bêche à découper une motte de terre autour de l'arbuste dont le collet est centré entre les deux couronnes concentriques de l'outil.

La présente invention a pour objet une machine de ce type, mais dont l'agencement permet d'accroître le rendement. Il s'avère en effet que si, pour chaque arrachage d'un arbuste, le tracteur doit cesser d'avancer, le nombre élevé des départs conduit, en cas d'arrachage intensif très rapide, à une usure prématurée du tracteur, notamment de son embrayage. La machine qui fait l'objet de l'invention vise donc essentiellement à permettre au tracteur de se déplacer en continu sans aucun arrêt, y compris pendant les phases d'arrachage des arbustes.

A cet effet le porte-outil servant de support à la bêche est monté coulissant sur au moins une glissière longitudinale fixée indirectement sur le tracteur et est équipé de moyens d'ancrage dans le sol, grâce auxquels la glissière peut se déplacer par rapport au porte-outil immobilisé par ces moyens d'ancrage pendant la phase d'arrachage, deux vérins étant prévus, l'un pour la commande des moyens d'ancrage et l'autre pour déplacer le porte-outil en direction de l'avant sur la glissière.

L'invention sera bien comprise d'ailleurs à l'aide de la description qui suit, en référence au dessin schématique annexé représentant à titre d'exemple non limitatif une forme d'exécution de cette machine

0103530

2

d'arrachage :

Figures 1 à 4 sont des vues schématiques illustrant diverses positions successives de la machine en arrière de son tracteur, respectivement : en position de transport à l'issue de la première phase avant un arrachage, puis pendant une deuxième phase située avant le découpage de la motte de terre, et à l'issue d'une troisième phase située à la fin du découpage de cette motte ;

Figures 5 et 6 sont des vues en plan de la machine dans deux positions situées respectivement avant et après déport de la machine pour une opération d'arrachage, et ;

Figure 7 est une vue schématique en perspective de l'ancre assurant l'immobilisation du porte-outil pendant l'opération de découpage de la motte de terre.

Dans ce dessin, (1) désigne le tracteur et (2) désigne de façon générale la machine d'arrachage qui fait l'objet de l'invention. La liaison entre ce tracteur et cette machine est réalisée au moyen de l'attelage à trois points désigné par (3).

La machine d'arrachage (2) peut être considérée comme étant formée de trois parties essentielles :

- un bâti vertical avant (4),
- un corps central (5),
- et un porte-outil (6), ce porte-outil présentant l'agencement qui fait l'objet du brevet principal et comportant donc notamment la bêche de travail (7).

Le bâti vertical avant (4) est formé de longerons et de traverses sur lesquelles sont fixées les trois chapes d'attelage (8), un palier longitudinal et horizontal (9) et le bras (10) d'articulation du corps du vérin (12).

Le corps central (5) est constitué de façon essentielle par un quadrilatère déformable comportant :

- un élément avant (13) en forme de plaque verticale,
- un élément arrière (14) formé d'une plaque verticale (14a) et d'une plaque horizontale (14b) raccordées par des goussets,
- et deux côtés longitudinaux (15) constitués par des bras dont les extrémités sont articulées aux éléments avant (13) et arrière (14) ; ces côtés longitudinaux (15) sont en fait disposés par paires.

L'élément avant (13) de ce quadrilatère déformable porte un axe (16) qui est dirigé vers l'avant et est logé à l'intérieur du palier (9) porté par le bâti vertical avant (4). De cet élément avant (13) est en outre solidaire une oreille (17) sur laquelle est articulée la tige du vérin (12). Il est dès lors concevable que, par ce vérin (12) il est possible de modifier l'orientation, ou plus exactement l'inclinaison, du corps central (5) par rapport au bâti vertical avant (4).

Quant à l'élément arrière (14) du quadrilatère déformable, il supporte, par l'intermédiaire de ses plaques (14a, 14b), un caisson (10) qui est disposé longitudinalement, est relativement long, est équipé de roues (20) lui permettant de reposer sur le sol, et porte des glissières horizontales (18).

Au quadrilatère déformable qui est ainsi constitué et qui supporte les glissières (18) est associé un vérin (19) permettant à ce quadrilatère de se déformer dans un plan normalement horizontal.

La première partie de la machine, c'est-à-dire le bâti vertical avant (4), est fixée au tracteur et portée par lui, la seconde partie ou corps central (5) est elle-même raccordée à la première partie ou bâti (4) au moyen d'un quadrilatère déformable permettant le déplacement latéral de cette deuxième partie par rapport à la première, et la troisième partie de la machine, c'est-à-dire le porte-outil (6), est solidaire de la deuxième partie, c'est-à-dire du corps central (5), mais avec possibilité de déplacement longitudinal par rapport à lui.

Le corps du porte-outil (6) est en effet équipé de deux bras (21) se terminant par des coulisseaux (22) coopérant avec les glissières (18) portées par le corps central (5) ; et un vérin (23) est prévu pour permettre le déplacement du porte-outil (6) en direction de l'arrière par rapport au corps central (5).

Au porte-outil (6) est associé un mécanisme d'ancrage dans le sol ; ce mécanisme est constitué par une ancre (24) montée verticalement coulissante sur un support fixe. Cette ancre (24) comporte deux ailes orthogonales : l'une transversale et l'autre longitudinale. Le but de ces deux ailes est d'assurer un bon ancrage de la machine dans les deux plans longitudinal et transversal lorsque l'ancre a pénétré dans le sol. Un vérin (25) commande le déplacement de l'ancre (24) en vue respectivement de sa pénétration dans le sol et de son extraction hors du sol.

Lorsque la machine (2) est en position de repos derrière le

4

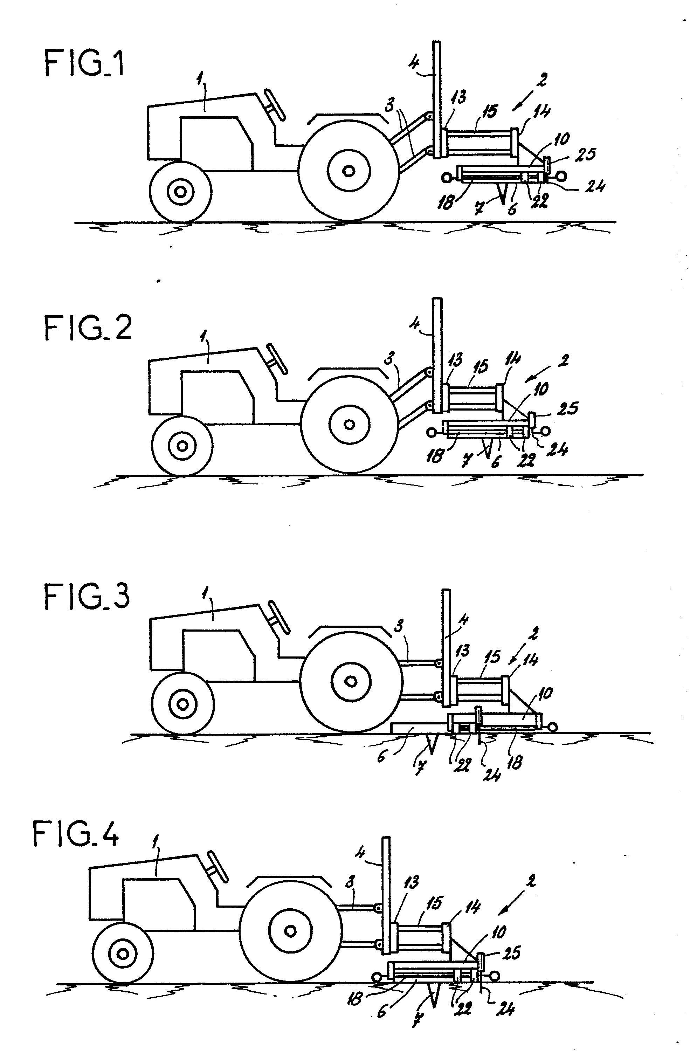

tracteur (1) ou en position de transport par exemple sur une route, le quadrilatère déformable entrant dans la constitution du corps central (5) est déformé dans un sens latéral tel que l'ensemble de la machine se trouve situé en arrière du tracteur, sensiblement dans son axe longitudinal, et que le porte-outil (6) est déplacé au minimum vers l'arrière par rapport au corps central (5) ; dans cette position, les coulisseaux (22) dont le porte-outil (6) est solidaire sont situés dans la zone arrière des glissières (18) portées par le corps central (5). Cette position de transport est visible à la figure 1.

Lorsque la machine doit entrer en action pour l'arrachage d'une ligne d'arbustes, le vérin (19) du quadrilatère déformable est actionné pour provoquer une déformation de ce quadrilatère telle que toute la partie arrière du corps central (5) et le porte-outil (6) se déplacent latéralement vers la droite par rapport au tracteur. La machine est ainsi décalée par rapport à l'axe longitudinal du tracteur. Dans cette position, visible à la figure 2, le porte-outil (6) présente son ouverture frontale en direction de la ligne d'arbustes à arracher. L'ensemble de la machine peut alors être descendu jusqu'à venir en contact par ses roues avec le sol ; mais avant qu'il y ait contact entre les roues (20) du porte-outil (6) et le sol, le vérin (23) est mis en fonctionnement pour provoquer le déplacement du porte-outil (6) en direction de l'avant par glissement des coulisseaux (22) sur les glissières (18).

Lorsque cette position a été atteinte et que le porte-outil (6) s'est présenté autour de l'arbuste à arracher, le vérin (25) entre en fonctionnement en provoquant la pénétration de l'ancre (24) dans le sol. C'est la position représentée aux figures 3 et 6.

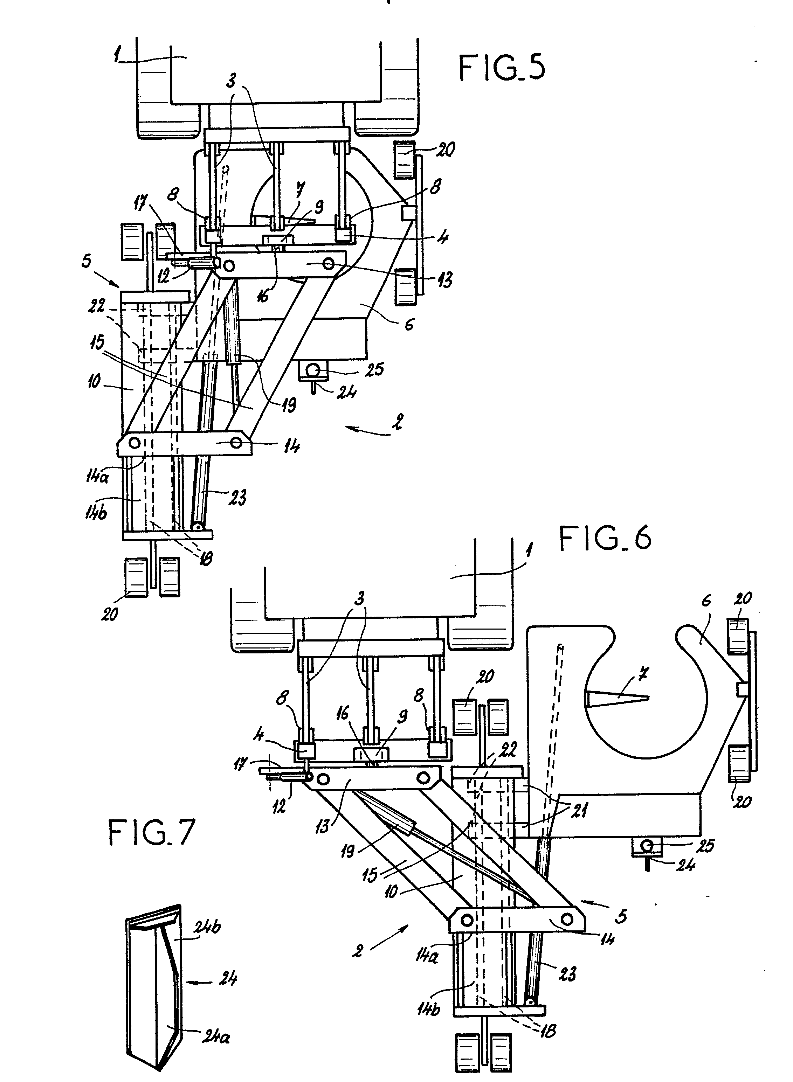

Dans cette position, le porte-outil (6) est immobilisé par l'ancre (24) et demeure immobile malgré la poursuite du mouvement de déplacement du tracteur vers l'avant. Ce déplacement est en effet rendu possible par coulissement des glissières (18) solidaires du corps central (5) à l'intérieur des coulisseaux (22) solidaires du porte-outil (6). C'est pendant ce mouvement de déplacement relatif du corps central (5) de la machine par rapport au porte-outil (6) que la bêche (7) effectue son mouvement de déplacement pendant lequel elle découpe une motte de terre autour de l'arbuste à arracher. Ce mouvement de déplacement relatif du corps central (5) et du porte-outil (6) ressort de la figure 4 par rapport à la figure 3.

5

Il est à noter que l'immobilisation du porte-outil (6) par l'ancre (24) est très efficace à la fois dans le sens longitudinal et dans le sens transversal car cette ancre comporte deux ailes verticales qui sont orthogonales l'une par rapport à l'autre, à savoir une aile longitudinale (24a) et une aile transversale (24b).

Comme il va de soi, la présente addition ne se limite pas à la seule forme d'exécution de cette machine d'arrachage qui a été ci-dessus décrite à titre d'exemple ; elle en embrasse au contraire toutes les variantes de réalisation.

6

## REVENDICATIONS

1. - Machine pour l'arrachage d'arbustes du type comportant un chassis qui, monté sur le relevage hydraulique (3) à trois points en arrière d'un tracteur (1), comporte une bêche rotative (7) portée par un porte-outil (6) en forme de couronne et animée d'un mouvement de rotation autour de son axe vertical pour découper une motte de terre autour de l'arbuste à arracher, laquelle bêche est constituée par une unique lame solidaire de ladite couronne qui présente une ouverture et est montée mobile en rotation dans une autre couronne solidaire du chassis et possédant une ouverture d'angle sensiblement égale, des moyens étant prévus pour déplacer la couronne intérieure dans celle extérieure et amener ainsi la bêche (7) à découper une motte de terre autour de l'arbuste dont le collet est centré entre les deux couronnes concentriques de l'outil, caractérisée en ce que le porte-outil (6) servant de support à la bêche (7) est monté coulissant sur au moins une glissière longitudinale (18) fixée indirectement sur le tracteur (1) et est équipé de moyens d'ancrage (24) dans le sol, grâce auxquels la glissière (18) peut se déplacer par rapport au porte-outil (6) immobilisé par ces moyens d'ancrage (24) pendant la phase d'arrachage, deux vérins étant prévus, l'un (25) pour la commande des moyens d'ancrage (24), et l'autre (23) pour déplacer le porte-outil (6) en direction de l'avant sur la glissière (18).

2. - Machine pour l'arrachage d'arbustes selon la revendication 1, caractérisée en ce que la ou les glissières (18) sont portées par un caisson (10) fixé sur l'élément arrière (14) d'un quadrilatère déformable dont l'élément avant (13) est muni d'un axe (16) porté et tourillonnant dans un palier (9) solidaire d'un bâti (4) équipé de moyens d'attelage au tracteur (1).

3. - Machine pour l'arrachage d'arbustes selon les revendications 1 et 2, caractérisée en ce qu'elle comporte deux vérins (12, 19), dont celui (12) prend appui fixe sur le bâti vertical avant (4) et appui mobile sur une oreille (17) de l'élément avant (13) du quadrilatère déformable, et dont celui (19) prend appui sur deux axes opposés de ce quadrilatère.

4. - Machine pour l'arrachage d'arbustes selon l'une quelconque des revendications 1 à 3, caractérisée en ce que le caisson (10) portant la ou les glissièrs (18) et le porte-outil (6) portant la bêche (7) sont munis de roues (20) d'appui sur le sol.

7

5. - Machine pour l'arrachage d'arbustes selon l'une quelconque des revendications 1 à 4, caractérisée en ce que les moyens d'ancrage (24) du porte-outil (6) par rapport au sol sont constitués par une ancre qui, déplaçable verticalement par le vérin (25), comporte deux ailes verticales orthogonales, l'une longitudinale (24a) et l'autre transversale (24b).

FIG.1

FIG.2

FIG.3

FIG.4

0103530

FIG.5

FIG.6

FIG.7

# RAPPORT DE RECHERCHE EUROPEENNE

EP  83 42 0147

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 594 931 (YOST) <br> * Colonne 2, ligne 54 - colonne 4, ligne 51; figures 1-11 * <br><br> ----- | 1 | A 01 G 23/04 |

DOMAINES TECHNIQUES RECHERCHES (Int. Cl. ³)

A 01 G

Le présent rapport de recherche a été établi pour toutes les revendications

| Lieu de la recherche <br> LA HAYE | Date d'achèvement de la recherche <br> 14-12-1983 | Examinateur <br> HERYGERS J.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82